# EUROPEAN PATENT SPECIFICATION

(11) **EP 2 743 106 B1**
(45) Date of publication and mention of the grant of the patent: **06.03.2019**
(21) Application number: 13196611.1
(22) Date of filing: 11.12.2013
(51) Int. Cl.: B60H 1/00, B60H 1/24, B60H 3/00

(54) **System for regulating the breathable air in a closed space and vehicle or vessel provided with such a system**
System zur Regulierung der Atemluft in einem geschlossenen Raum und Fahrzeug oder Schiff mit solch einem System
Système de régulation de l'air respirable dans un espace fermé et véhicule ou navire équipé d'un tel système

(30) Priority: 14.12.2012 DE 102012112287
(43) Date of publication of application: 18.06.2014
(73) Proprietor: BMAir International B.V., 5253 RJ Nieuwkuijk (NL)
(72) Inventor: Van Dijk, Thomas Wilhelmus, 5144 WP Waalwijk (NL)
(74) Representative: Patentwerk B.V.

(56) References cited:
- DE-A1- 19 604 661
- DE-U1- 9 214 412
- GB-A- 1 126 449
- US-A- 3 461 789

## Description

The present invention relates to a system for regulating the breathable air in a space such as a portacabin, a cabin on a ship, gantry crane or particularly a cab of a ground working vehicle.

When working ground or for instance transporting materials such as coal or waste it is possible for toxic substances, usually gases, to be released, breathing of which by the operator present in the cab is undesirable. It is known for this purpose to filter the air supplied to the cab, for instance using filter overpressure systems, wherein a pressure higher than that of the ambient air is created in the cab in order to prevent infiltration of toxic substances via the cab, which is generally not closable in completely airtight manner.

In those cases where insufficient oxygen is present or where the air is assumed to be contaminated such that filtering is not possible, use is made of breathing air systems, i.e. systems wherein breathable air is provided in bottles and is guided to the cab. Such systems are for instance marketed commercially by SEKA.

A drawback of such systems is that they can only be used for a limited successive period of time since the quantity of breathable air which can be stored is limited. These systems are also time-consuming in use, and therefore also expensive, due to the necessity of replacing or filling the air bottles.

DE19604661 discloses an automatic compresses air storage system for interiors of vehicles without a filter, and allows air to come from outside or from pressurized storage tanks.

It is an object of the present invention to obviate the above stated drawbacks of the prior art or to provide a worthwhile alternative.

The invention provides for this purpose a system for regulating the breathable air in a closed space, particularly of a cab of a vehicle or vessel, comprising an air intake opening for taking in ambient air from outside the space, a measuring system for measuring a predetermined condition, an air filter, for filtering ambient air from the intake opening and a control system for supplying intake ambient air to the space as breathable air via an air filter or closing the air intake opening and supplying breathable air to the space from a reservoir, both subject to the measured condition.

Breathable air is understood here to mean a mixture suitable for inhaling, which is thus not limited to oxygen. The system according to the invention provides the advantage that the safety of an operator present in the space is ensured in that it closes the air intake opening as soon as a predetermined condition is met, while the control system ensures that sufficient breathable air is always present in such a case. Also achieved in this way is that breathable air from the reservoir is not used before the measured conditions make it necessary to do so. The reservoir can be an oxygen bottle or an assembly of several oxygen bottles, wherein these can be activated separately or connected in parallel.

The predetermined conditions can relate directly or indirectly to toxic constituents in the ambient air and/or the measured value of the oxygen level in the air, and the conditions can particularly be a (directly) measured value of the indrawn air such as a toxicity, a geographical value such as reaching or approaching a location known to have (an increased risk of) toxic air, or an ambient condition such as a temperature or light intensity. These latter measurements can for instance be related to driving in a tunnel, pit, cellar, ship's hold, closed space or otherwise less ventilated space, or to reaching a temperature above which determined substances are released. The measurement and/or detection possibly takes place by means of control commands given by the operator, such as switching of a (light) switch.

Usable detectors for determined embodiments are a proximity switch (when approaching a dangerous area) and a position determination switch (beyond a determined point, or in a determined area known to be heavily polluted). This latter variant can be coupled to or provided with a GPS position determining system or navigation system.

For a direct determination of toxicity in the air the control system can for instance comprise a sensor from the group of an O₂ sensor, a Volatile Organic Compound (VOC) sensor, a CO sensor or an ammonia sensor. The control system can also be configured to detect concentrations of substances which cannot be filtered (for instance CO) but also of excessively high concentrations of substances which can be filtered (for instance benzene), or excessively high or low values of oxygen.

In order to prevent infiltration of toxic substances via openings in the space the system can also be configured to supply breathable air to the space under overpressure relative to the pressure of the ambient air, in particular an overpressure of more than 50 Pa, preferably more than 75 Pa, and in particular around 100 Pa.

The air filter can comprise a passive filter, although an active carbon filter is preferably applied which is configured to filter one or more constituents from the group of:

| | |
|---|---|
| - A | Organic gases and solvents (petrol, PAHs, aromatics); |
| - B | Inorganic gases and halogens (chlorine, hydrogen sulphide, cyanides); |
| - E | Inorganic vapours and acidic gases (sulphur oxides, hydrochloric acid); |
| - K | Ammonia, composting; |
| - Hg | Mercury, renovation, gas extraction; |
| - ABEK | in accordance with EN14387. |

An ABEK filter is a filter that protects for A, B, E as well as K, in accordance with EN14387.

The filter overpressure system can be supplied with a so-called P1 dust filter which can be employed for daily use other than for a clean-up operation. P2 filters are then applied to filter harmful fine dust and P3 filters to block, among others, toxic fine dust such as asbestos particles and quartz dust.

In a particularly advanced embodiment the system is configured to influence the airflow (speed or flow rate) through the filter. The bonding time of contaminated substances to the carbon does after all determine the ratio of separation, which varies per substance. The contact time, and thereby the efficiency of the filter, can be influenced by influencing the airflow.

In a further embodiment the control system is also configured to close the air intake opening when the intake air comprises more than a predetermined value of a substance which can be filtered or when the filtered air comprises more than a predetermined value of a substance which cannot be filtered. An example is too high a concentration of substances which cannot be filtered or too high a concentration of substances which can be filtered, resulting in the risk of saturation of the filter whereby the substance passes though the filter unfiltered.

In a preferred embodiment the control system is configured to continue measuring the toxicity of the ambient air when the air intake opening is closed and to open the air intake opening and supply breathable air to the space via the air filter and to stop the supply of air from the reservoir to the space, both subject to the measured toxicity.
Use being made longer than necessary of breathable air from the reservoir is in this way prevented. The system hereby becomes economical in use. In a further embodiment the system is provided with a warning device for making measured toxicity known to an operator. The system can also be provided with a dead man's button to which an alarm system is coupled.

The invention also relates to a vehicle or vessel provided with a system as described above.

The invention will be further elucidated with reference to the following figures, in which:
- Figure 1 shows a schematic view of a vehicle provided with a system according to the present invention; and
- Figure 2 shows a flow chart of the operation of the system according to the present invention.

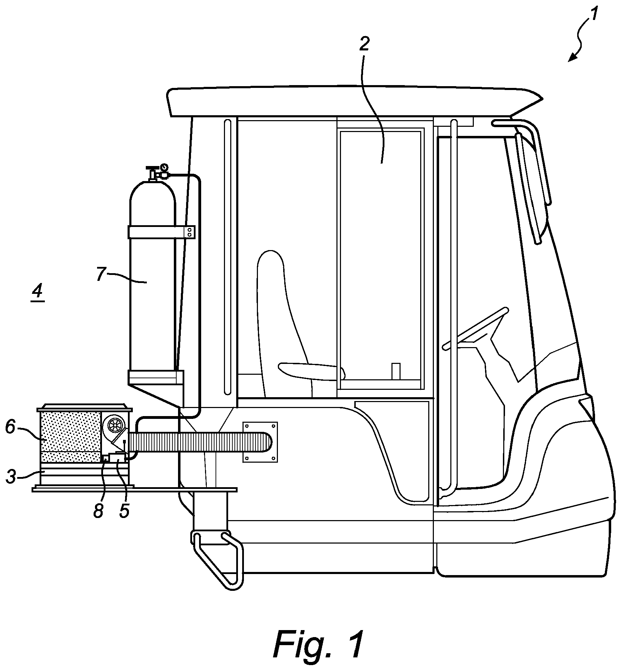

Figure 1 shows a schematic view 1 of a system for regulating the breathable air in a cab 2 of a ground working vehicle, comprising an air intake opening 3 for intake of ambient air 4 from outside cab 2, a measuring system (not shown) for measuring a predetermined condition and a control system 8 with a monitoring system 8a in the cab for the purpose of supplying intake ambient air to cab 2 as breathable air via an air filter 6 and closing the air intake opening 3 and supplying breathable air from a reservoir 7 to cab 2, both subject to the measured condition. Control system 5 comprises for this purpose a controllable switch 5 with which the breathable air is supplied via filter 6 to the cab.

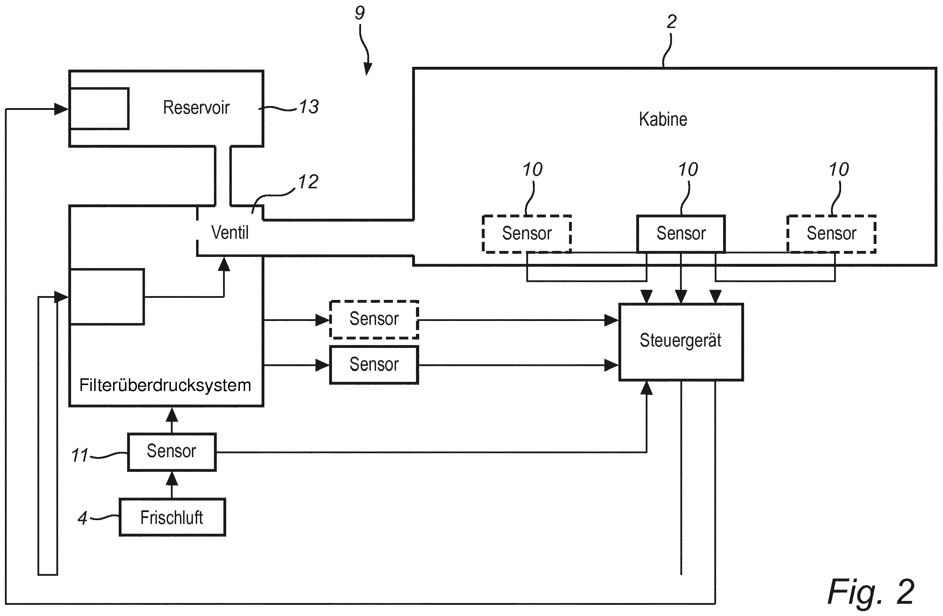

Figure 2 shows a flow chart 9 of the operation of the system according to the present invention. Shown is that the control device controls the filter device and the air supply from reservoir 13 on the basis of signals generated by sensors 10 inside and 11 outside cab 2. The supply of air from outside cab 2 can be shut off by means of operating a valve 12 and air from the reservoir can be supplied via the filter to cab 2.

In addition to the shown embodiments, many variants can be envisaged with filter types and/or sensors not referred to or wherein the control system is configured to supply to the cab a mixture of filtered breathable air and air from the reservoir. These variants are all deemed to fall within the scope of protection of the following claims.

## Claims

1. System (1) for regulating the breathable air in a closed space (2), particularly a cab, comprising:
- an air intake opening (3) for taking in ambient air (4) from outside the space (2);
- a measuring system for measuring a predetermined condition;
- **characterized by** an air filter (6), for filtering ambient air from the intake opening;
- a control system (8) for
• supplying intake ambient air (4) to the space (2) as breathable air via the air filter (6), or
• closing the air intake opening (3) and supplying breathable air to the space (2) from a reservoir (7, 13),
both subject to the measured condition.

2. System (1) as claimed in claim 1, wherein the predetermined condition is a condition from the group of:
- a measured value of the indrawn air such as a toxicity;
- a geographical value such as reaching or approaching a location;
- an ambient condition such as a temperature or light intensity.

3. System (1) as claimed in claim 1 or 2, wherein the control system (8) comprises a sensor (10, 11), such as a gas detection sensor, from the group of:
- O₂ sensor;
- Volatile Organic Compound (VOC) sensor;
- CO sensor;
- ammonia sensor.

4. System (1) as claimed in any of the foregoing claims, configured to supply breathable air to the space (2) under overpressure relative to the pressure of the ambient air (4), in particular an overpressure of more than 50 Pa, preferably more than 75 Pa, and in particular around 100 Pa.

5. System (1) as claimed in any of the foregoing claims, wherein the air filter (6) comprises an active carbon filter configured to filter one or more constituents from the group of:
| | |
|---|---|
| - A | Organic gases and solvents (petrol, PAHs, aromatics); |
| - B | Inorganic gases and halogens (chlorine, hydrogen sulphide, cyanides); |
| - E | Inorganic vapours and acidic gases (sulphur oxides, hydrochloric acid); |
| - K | Ammonia, composting; |
| - Hg | Mercury, renovation, gas extraction; |
| - ABEK | in accordance with EN14387. |

6. System (1) as claimed in any of the foregoing claims, wherein the control system (8) is configured to close the air intake opening (3) when the intake air comprises more than a predetermined value of a substance which can be filtered or when the filtered air comprises more than a predetermined value of a substance which cannot be filtered.

7. System (1) as claimed in any of the foregoing claims, wherein the control system is configured to continue measuring the toxicity of the ambient air (4) when the air intake opening (3) is closed, and
• to open the air intake opening (3) and supply breathable air to the space (2) via the air filter (6); and
• to stop the supply of air from the reservoir (7, 13) to the space (2),
both subject to the measured toxicity.

8. System (1) as claimed in any of the foregoing claims, configured to influence the airflow (speed or flow rate) through the filter (6).

9. Vehicle or vessel provided with a system (1) as claimed in any of the foregoing claims.

## Patentansprüche

1. System (1) zur Regulierung der Atemluft in einem geschlossenen Raum (2), insbesondere einem Führerhaus, Folgendes umfassend:
- eine Lufteinlassöffnung (3) zum Aufnehmen von Umgebungsluft (4) von außerhalb des Raums (2);
- ein Messsystem zum Messen eines festgelegten Zustands;
- **gekennzeichnet durch** einen Luftfilter (6) zum Filtern von Umgebungsluft aus der Einlassöffnung;
- ein Steuerungssystem (8) zum
• Liefern von Einlassumgebungsluft (4) an den Raum (2) als Atemluft über den Luftfilter (6), oder
• Schließen der Lufteinlassöffnung (3) und Liefern von Atemluft an den Raum (2) aus einem Reservoir (7, 13),
wobei beide dem gemessenen Zustand unterliegen.

2. System (1) nach Anspruch 1, wobei der festgelegte Zustand ein Zustand aus der folgenden Gruppe ist:
- ein Messwert der eingezogenen Luft, zum Beispiel Toxizität;
- ein geografischer Wert, zum Beispiel das Erreichen oder Annähern an einen Standort;
- ein Umgebungszustand, zum Beispiel eine Temperatur oder Lichtintensität.

3. System (1) nach Anspruch 1 oder 2, wobei das Steuerungssystem (8) einen Sensor (10, 11), wie zum Beispiel einen Gasdetektionsensor, aus der folgenden Gruppe umfasst:
- O₂-Sensor;
- Sensor für flüchtige organische Verbindungen (FOV);
- CO-Sensor;
- Ammoniaksensor.

4. System (1) nach einem der vorstehenden Ansprüche, das dazu konfiguriert ist, Atemluft unter Überdruck in Bezug zu dem Druck der Umgebungsluft (4) an den Raum (2) zu liefern, insbesondere einen Überdruck von mehr als 50 Pa, bevorzugt mehr als 75 Pa und insbesondere etwa 100 Pa.

5. System (1) nach einem der vorstehenden Ansprüche, wobei der Luftfilter (6) einen Aktivkohlefilter umfasst, der dazu konfiguriert ist, eine oder mehrere Komponenten der folgenden Gruppe zu filtern:
- A Organische Gase und Lösungsmittel (Benzin, PAKs, Aromaten);
- B Anorganische Gase und Halogene (Chlor, Schwefelwasserstoff, Zyanide);
- E Anorganische Dämpfe und saure Gase (Schwefeloxide, Salzsäure);
- K Ammoniak, Kompostierung;
- Hg Quecksilber, Renovierung, Gasförderung;
- ABEK in Übereinstimmung mit EN14387.

6. System (1) nach einem der vorstehenden Ansprüche, wobei das Steuerungssystem (8) dazu konfiguriert ist, die Lufteinlassöffnung (3) zu schließen, wenn die Einlassluft mehr als einen festgelegten Wert einer Substanz umfasst, die gefiltert werden kann oder wenn die gefilterte Luft mehr als einen festgelegten Wert einer Substanz umfasst, die nicht gefiltert werden kann.

7. System (1) nach einem der vorstehenden Ansprüche, wobei das Steuerungssystem dazu konfiguriert ist, das Messen der Toxizität der Umgebungsluft (4) fortzusetzen, wenn die Lufteinlassöffnung (3) geschlossen ist, und
• die Lufteinlassöffnung (3) zu öffnen und über den Luftfilter (6) Atemluft an den Raum (2) zu liefern; und
• die Lieferung von Luft aus dem Reservoir (7, 13) an den Raum (2) zu stoppen,
in beiden Fällen unter Berücksichtigung der gemessenen Toxizität.

8. System (1) nach einem der vorstehenden Ansprüche, das dazu konfiguriert ist, den Luftstrom (Geschwindigkeit oder Durchfluss) durch den Filter (6) zu beeinflussen.

9. Fahrzeug oder Schiff, das mit einem System (1) nach einem der vorstehenden Ansprüche ausgestattet ist.

## Revendications

1. Système (1) destiné à réguler l'air respirable dans un espace fermé (2), en particulier une cabine, comprenant :
- une ouverture d'entrée d'air (3) destinée à prélever de l'air ambiant (4) depuis l'extérieur de l'espace (2) ;
- un système de mesure destiné à mesurer une condition prédéterminée ;
- **caractérisé par** un filtre à air (6), destiné à filtrer l'air ambiant provenant de l'ouverture d'entrée ;
- un système de contrôle (8) destiné à
• fournir l'air ambiant prélevé (4) à l'espace (2) en tant qu'air respirable par le biais du filtre à air (6), ou
• fermer l'ouverture d'entrée d'air (3) et fournir de l'air respirable à l'espace (2) depuis un réservoir (7, 13),
tous deux en fonction de la condition mesurée.

2. Système (1) selon la revendication 1, dans lequel la condition prédéterminée est une condition du groupe constitué par :
- une valeur mesurée de l'air aspiré à l'intérieur telle qu'une toxicité ;
- une valeur géographique telle que l'atteinte ou l'approche d'un lieu ;
- une condition ambiante telle qu'une température ou une intensité lumineuse.

3. Système (1) selon la revendication 1 ou 2, dans lequel le système de contrôle (8) comprend un capteur (10,11), tel qu'un capteur de détection de gaz, du groupe constitué par :
- un capteur d'O₂ ;
- un capteur de composés organiques volatils (COV) ;
- un capteur de CO ;
- un capteur d'ammoniac.

4. Système (1) selon l'une quelconque des revendications précédentes, configuré pour fournir de l'air respirable à l'espace (2) en surpression par rapport à la pression de l'air ambiant (4), en particulier une surpression de plus de 50 Pa, de préférence plus de 75 Pa, et en particulier autour de 100 Pa.

5. Système (1) selon l'une quelconque des revendications précédentes, dans lequel le filtre à air (6) comprend un filtre à charbon actif configuré pour filtrer un ou plusieurs constituants du groupe constitué par :
- A gaz et solvants organiques (pétrole, HAP, aromatiques) ;
- B gaz inorganiques et halogènes (chlore, sulfure d'hydrogène, cyanures) ;
- E vapeurs inorganiques et gaz acides (oxydes de soufre, acide chlorhydrique) ;
- K ammoniac, compostage ;
- Hg mercure, rénovation, extraction de gaz ;
- ABEK conformément à la norme EN14387.

6. Système (1) selon l'une quelconque des revendications précédentes, dans lequel le système de contrôle (8) est configuré pour fermer l'ouverture d'entrée d'air (3) quand l'air prélevé comprend plus qu'une valeur prédéterminée d'une substance qui peut être filtrée ou quand l'air filtré comprend plus qu'une valeur prédéterminée d'une substance qui ne peut pas être filtrée.

7. Système (1) selon l'une quelconque des revendications précédentes, dans lequel le système de contrôle est configuré pour poursuivre la mesure de la toxicité de l'air ambiant (4) quand l'ouverture d'entrée d'air (3) est fermée, et
• pour ouvrir l'ouverture d'entrée d'air (3) et fournir de l'air respirable à l'espace (2) par le biais du filtre à air (6) ; et
• pour arrêter la fourniture d'air depuis le réservoir (7, 13) à l'espace (2),
tous deux en fonction de la toxicité mesurée.

8. Système (1) selon l'une quelconque des revendications précédentes, configuré pour influencer l'écoulement d'air (vitesse ou débit) à travers le filtre (6).

9. Véhicule ou enceinte pourvus d'un système (1) selon l'une quelconque des revendications précédentes.
